# EUROPEAN PATENT SPECIFICATION

(11) **EP 4 006 374 B1**
(45) Date of publication and mention of the grant of the patent: **17.04.2024**
(21) Application number: 21203108.2
(22) Date of filing: 18.10.2021
(51) Int. Cl.: F16D 65/12, B61H 5/00, F16D 65/02

(54) **ONE-PIECE BRAKE DISC FOR ROLLING STOCK**
EINTEILIGE BREMSSCHEIBE FÜR SCHIENENFAHRZEUGE
DISQUE DE FREIN MONOBLOC POUR VÉHICULES SUR RAILS

(30) Priority: 30.11.2020 SI 202000222
(43) Date of publication of application: 01.06.2022
(73) Proprietor: Kovis, d.o.o., 8250 Brezice (SI)
(72) Inventor: GRIVC, Uros, 8290 Sevnica (SI)
(74) Representative: Jersan, Tatjana

(56) References cited:
- WO-A1-2005/052403
- WO-A1-2015/090890
- DE-A1-102009 027 116
- DE-B- 1 200 339
- GB-A- 1 149 126
- US-A1- 2011 240 422
- US-A1- 2019 195 300

## Description

The subject of the invention is a one-piece brake disc for rolling stock with improved hub mounting, namely two annular discs are mounted to a hub via flexible brackets.

A disc brake of rolling stock usually consists of a brake disc, a hub and brake caliper. A brake disc is usually made of two brake plates which are in a form of coaxial annular discs which are interconnected by radial cooling ribs, so that air passages are formed between the annular discs, which improve the cooling of the brake disc during braking operation. In addition, the cooling ribs provide the required strength of the brake disc, as they additionally connect the annular discs.

The hub is attached to an axle with a tight fit, while the brake disc is attached or fastened to the hub or an inner ring via brackets, the first ends of the brackets being equidistantly circumferentially arranged on the hub, on its outer circumference, while the other ends of the brackets are attached to the brake disc on the inner surface of both annular discs. In this way, a solid connection is formed between the annular discs and the hub, which must withstand high braking torque and forces during braking operation.

The brake plate of the disc brake must be capable of accumulating a large amount of thermal energy, for example during braking operation of rolling stock. In such braking, the kinetic energy is converted through friction between the brake disc and the brake pads into thermal energy that heats the brake plates. Due to heating, the brake disc expands, namely the brake disc extends in the radial direction, and, in addition, the annular discs of the brake disc deform convexly, i.e. the portions of the annular discs at the inner circumference and at the outer circumference are bent towards each other. Due to the extension of the brake disc in the radial direction, the brackets connecting the annular discs to the hub are subjected to loads; due to the convex deformation of the annular discs, the cooling ribs connecting the two annular discs are subject to bending loads, namely those located along the inner circumference and along the outer circumference of the annular discs. The cooling ribs located along the intermediate radii of the annular discs are subjected to lower bending loads. The described changes in the brake disc due to the increase in temperature consequently affect the performance of the disc brake. High temperatures and local temperature differences can cause mechanical damage to the surface of the brake disc, which is reflected in cracks and plastic deformations of the brake disc. When the brake disc expands as the temperature rises, it simultaneously loads the brackets connected to the hub in the radial direction, which can also lead to deterioration of the tight fit of the hub to the axle, namely the surface pressure between the hub and the axle decreases on the very tight fit, thus reducing the ability to transmit torque through the joint. It must further be ensured that the stresses generated during braking operation do not exceed constant dynamic stresses. In this way, a long service life of the brake disc is ensured, otherwise cracks may occur in the holders due to material fatigue.

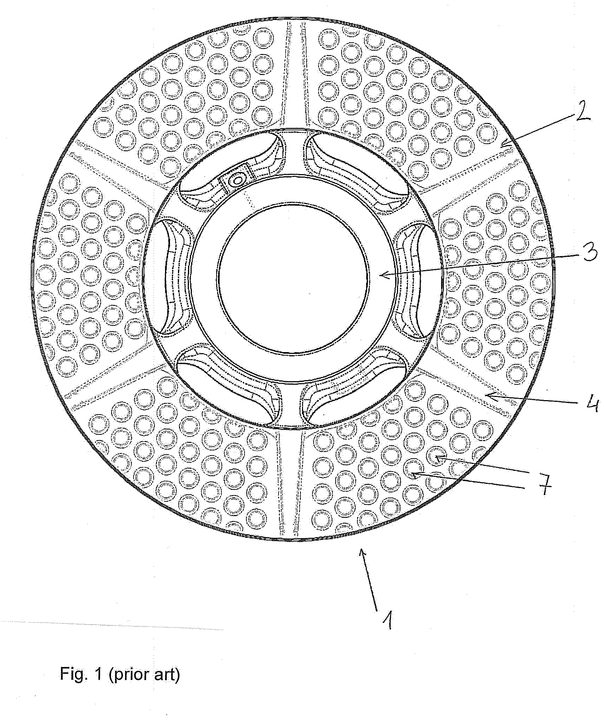

An embodiment of a one-piece brake disc as shown in Figure 1 is known from prior art. The brake disc has six rigid brackets for transferring loads from the annular discs to the hub. These brackets have a large cross-section as they must withstand high forces during thermal expansion of the annular discs. However, since thermal expansion cannot be stopped despite the high stiffness, this is reflected in an increase in the inner diameter of the hub, where a tight fit with the axle is present, so a decrease in the coupling force occurs during braking operation, which can affect safety during operation. Because these brackets must have a large cross-section, the entire product is also heavier. However, extremely high stresses are created in these radial brackets during braking operation, which can lead to cracks. Since the thermal deformation of brake discs is caused by temperature gradients and the temperature rise itself, the main load on such a disc is due to thermal expansion. A new flexible configuration allows a large proportion of mechanical loads resulting from the elevated temperature to be reduced with a special bracket that is configured in such a way that the loads in the radial direction are not fully transferred to the hub and is rigid at the same time for tangential loads during braking operation.

For example, a one-piece brake disc with a similar function is disclosed in patent application No. AU 2003262331 A1. The described structure represents only a theoretical proposal, since such a structure of a brake disc is not feasible in practice. Patent application No. WO 2005/052403 A1 also discloses a one-piece brake disc having brackets provided with two arms which are longitudinally curved in their circumferential direction and attached to a hub. The brackets are robust in order to transmit lateral forces in the tangential direction due to the torque caused by braking, thus increasing the weight of the brake disc, and in addition the robust brackets do not allow sufficient flexibility of the arms in the radial direction. In addition, these brackets occupy much space, which means that fewer brackets can be installed around the circumference of the hub, which makes it difficult to distribute the torque across the brackets.

Relevant prior art can for example also be found in documents US 2011/240422, DE 10 2009 027116, GB 1149 126 and DE 12 00 339, wherein different designs of brackets are disclosed, and in documents WO 2015/090890 and US 2019/195300, wherein different arrangements of the cooling ribs are disclosed.

The above-mentioned disadvantages are solved by an improved construction of the brake disc according to the invention defined by independent claim 1. Embodiments of the invention are claimed in the dependent claims. The brake disc according to the invention is cast in one piece together with the hub from ductile iron. By attaching the brake disc, i.e. brake plates to the hub via flexible brackets, a freer thermal expansion of the brake plates in the radial direction is enabled, thus significantly reducing the stresses on the brackets caused by thermal deformations that occur during braking operation of rolling stock. As a result, the brackets present less load on the hub in the radial direction, so that the tight fit of the hub with the axle is more constant, thus maintaining the ability to transmit torque through the joint. Attaching the brake disc to the hub via flexible brackets additionally enables easier and cheaper production and faster installation, as there is no need for connecting elements, and the weight of the entire brake disc is also lower.

The invention will be described in more detail herein below and illustrated in figures:
Fig. 1 shows a brake disc from prior art
Fig. 2 shows a brake disc of the invention
Fig. 3 shows a section of the brake disc of the invention without one brake plate

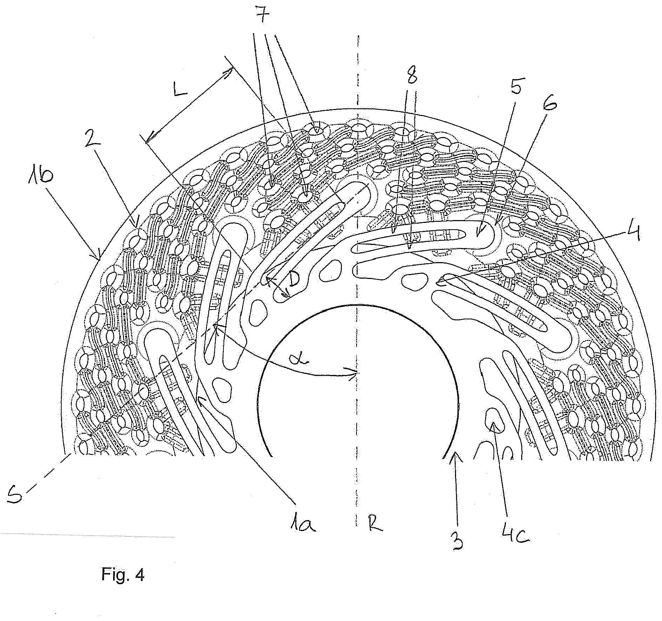

Fig. 4 shows a cross-section of the brake disc of the invention
Fig. 5 shows a cross-section of a flexible bracket
Fig. 6 shows deformation of the flexible bracket during heating of the brake disc
Fig. 7 shows a change in the coupling force on the tight fit of the hub with the axle A brake disc 1 consists of two coaxial annular discs, i. e. brake plates 2, which are interconnected by cooling ribs 7, a hub 3 and flexible brackets 4. The first ends of the flexible brackets 4 are equidistantly circumferentially arranged on an outer circumference 3a of the hub 3, the second ends of the brackets 4 being attached to the inner surface of the brake plates 2, whereby the brake plates 2 are inseparably attached to the hub 3 via the flexible brackets 4.

The bracket 4 is formed of a rigid portion 4a, with which the bracket 4 is inseparably attached to the outer circumference 3a of the hub 3, and of a flexible portion 4b which continues from the rigid portion 4a, the flexible portion 4b being made at a certain inclination with respect to a radial axis R, and the flexible portion 4b is provided at the point of attachment to the brake plate 2 with an attachment point 5, with which it is inseparably attached to both brake plates 2 via a cast connection 6.

The angle α of inclination of the flexible portion 4b of the bracket 4 also depends on the point of attachment of the flexible portion 4b to the brake plate 2. The point of attachment is selected in a way that the angle α of inclination enclosed by the radial axis R passing through the centre of the attachment point 5 and a longitudinal line S connecting the points at the beginning and end of the flexible portion 4b of the brackets 4 and passing through the centre of the attachment point 5, is between 35 and 50°.

To achieve the optimal characteristics of the brake disc 1, it is desirable that the angle α of inclination is greater, as it allows greater stress release during thermal deformation, thus reducing the stresses acting on the brake disc 1 during braking operation.

Namely, a sufficiently large angle α allows the expansion of the brake plates 2 in the radial direction due to the temperature rise not to cause the tensile force of the flexible bracket 4 on the hub 3 in the radial direction, as would happen at an angle α = 0, but causing bending of the flexible portion 4b of the bracket 4, which allows the attachment point 5 of the bracket 4, which is at the same time the point of attachment on the brake plate 2, to move away in the radial direction from the hub 3 without undesired force in the radial direction of the bracket 4 to the hub 3.

The length L of the flexible portion 4b of the bracket 4 is defined in each case so that the optimal characteristics of the brake disc 1 are achieved and is interdependent on the angle α. It also depends on the dimensions of the brake disc 1, on the spatial limitations of the brake disc 1 due to the most optimized arrangement of the cooling ribs 7 and on the point of attachment of the flexible portion 4b on the brake plate 2. It is desirable that the length L of the flexible portion 4b is determined in a way that the point of attachment allows the optimum arrangement of the cooling ribs 7, especially along the inner circumference 1a of the brake disc 1, i.e. the inner circumference of the brake plates 2, while providing a sufficient angle α.

The attachments points 5 also connect both brake plates 2 to each other, so they also have the function of providing structural strength between both brake plates 2, and the cooling ribs 7 have the same function.

If the point of attachment is closer to the outer circumference 1b of the brake disc 1 while providing a defined angle α, this means longer lengths L of the flexible portion 4b and thus longer brackets 4. The closer the point of attachment is to the outer circumference 1b, the greater the radial loads on the bracket 4, since the brake plates 2 expand more in the radial direction along the outer circumference 1b due to the temperature rise than along the inner circumference 1a. Longer brackets 4 increase the flexibility of the bracket 4, but at excessive lengths the strength and load capacity of the bracket 4 can be reduced, so a compromise is needed in optimizing the brake disc 1 based on its dimensions. Too long or too short lengths L of the flexible portion 4b also do not allow optimal distribution of cooling ribs 7 which provide the necessary strength, thus deteriorating the characteristics of the brake disc 1, as cooling ribs 7 provide for structural strength of the interconnection of the brake plates 2 and consequently the structural strength of the brake disc 1, and allow the heat from the brake plates 2 to be dissipated to the surroundings faster, the brake disc 1 is exposed to a lower heat load, resulting in less deformation of the brake disc 1, reduced wear and improved friction properties.

Preferably, the point of attachment of the flexible portion 4b on the brake plate 2 is formed proximal to the inner circumference of the brake plates 2, at about one third to one half of the width of the brake plates 2 in the radial direction. In this way, the optimal arrangement of the cooling ribs 7 and the reduction in the radial deformation of the bracket 4 is enabled, as the deformation is more extensive the higher on the brake plates 2 the point of attachment is made.

If the brackets 4 on the brake plates 2 were fastened closer to the inner circumference 1a of the brake plates 2, they could not be optimally arranged, but if they were fastened closer to the outer circumference 1b of the brake plates 2, the load on the brackets 4 would be higher due to thermal deformation, which would be reflected in the bracket 4 as a higher stress, the bracket 4 should therefore be longer to compensate for the greater deformation, which would further pose a problem in the configuration of the cooling ribs 7. It is therefore desirable that the brackets 4 on the brake plates 2 be fastened in such a way as to allow an optimal arrangement of the cooling ribs 7 and the brackets 4 and the limitation is the length of the brackets 4. The rigid portion 4a of the bracket 4 is attached to the hub 3 such that the contact surface of the rigid portion 4a of the bracket 4 and the hub 3 is substantially perpendicular to the radial axis R. Optionally, the rigid portion 4a of the bracket 4 is provided with a hole 4c to reduce the weight of the brake disc 1. Optionally, the rigid portion 4a of the bracket 4 is provided on one side with a radius r, which allows, among other things, the flexible portion 4b to be moved away from the hub 3 in the radial direction for a certain distance D.

It is desirable that the radius r be large enough that the stresses in bracket 4 during the operation of the brake disc 1 are under constant dynamic loads and that it may be produced by the casting process. In this way, the flexible portion 4b, at the point where the flexible portion 4b continues from the rigid portion 4a, is raised above the outer circumference 3a of the hub 3 by the distance D, thus increasing the angle α at the same length of the bracket 4, while allowing installation of a larger number of brackets 4. If there are more brackets 4, they can withstand higher braking torque, which means greater safety, and at the same time more brackets 4 also means higher weight of the brake disc 1, which is not desirable, so a compromise must be found. Since the angle α is larger, the direction of heat load of the bracket 4 is more optimal, i.e. as perpendicular as possible to the flexible portion 4b. At the same time, at higher angles α, the braking force acts along the bracket 4 in the compressive or tensile direction, depending on the direction of rotation during braking, and not in the bending direction, which is desirable.

The attachment point 5 of the bracket 4 and the configuration of the cast connection 6 preferably have a circular or elliptical cross-sectional shape.

According to the invention, the flexible portion 4b is made of two mutually parallel arms 8 to prevent rotation of the bracket 4 at the point of attachment of the bracket 4 to the brake plate 2 during the deformation that occurs during braking.

The arms 8 are flat and rounded in cross-section at the edges.

According to the invention, the width of the arm 8 is at least 3 times greater than its thickness. The flat configuration of the arms 8 improves their flexibility in the radial direction, while the arms 8 still withstand tensile or compressive loads during braking. The loads due to the braking torque are small compared to the loads caused by thermal expansion, so it is desirable to have sufficient flexibility of the arms 8 in the radial direction so that due to the increase in the temperature of the brake plates 2 and their deformation in the radial direction, the arms 8 or flexible portions 4b of the bracket 4 can deflect in the radial direction. Due to the flat design of the arms 8, no large stresses occur in them during deflection. Namely, the smaller the thickness of the arms 8, the more they bend at the same load, the stresses in the bracket 4 are lower at the same deformation or deflection of the bracket 4.

According to the invention, the width of a gap 8a between the arms 8 is approximately identical to the width of an individual arm 8.

In one of the embodiments, the arms 8 are slightly bent in the direction of the axis of rotation. Slight curvature solves the problem of uneven space between the brackets 4 and improves the distribution (possibility of installing a larger number of brackets 4) along the circumference of the hub 3 due to the limitations of the casting process. Due to production limitations in the production of the brake disc 1, the brake disc 1 is namely cast together with the hub 3 from ductile iron in one piece, and since the minimum distance between the brackets 4 in sand casting process is nine mm, it is necessary to slightly bend the arms 8 to reach the best possible distribution and thus maintain at least this distance between the brackets 4.

The brackets 4 were optimized with the help of FEM simulations (finite element method) so that the lowest possible stress is created in them during the deformation itself and that the safety against deflection of the brackets 4 is very high during braking. Based on the dimensions of the brake disc 1, the FEM simulations optimize the length L of the flexible portion 4b, the diameter of the attachment point 5 at the point of attachment of the bracket 4 on the brake plate 2 and the configuration and dimension of the radius r, where the rigid portion 4a is fused to the hub 3.

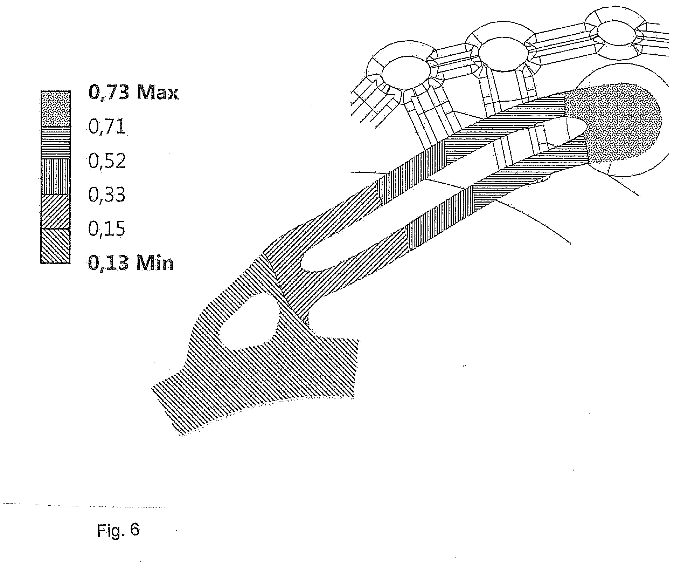

Fig. 6 shows the deformation of the flexible bracket 4 during heating of the brake disc 1. The radial displacement in mm is shown, the displacement magnification factor being 50. Due to the proposed construction of the brake disc 1, the outer end of the bracket 4 moves relatively freely outwards in the radial direction. The outer end of the bracket 4 relates to the flexible portion 4b of the bracket 4 in the area where the bracket 4 is fastened on the brake plate 2. At the same time, the bracket 4 is rigid under tangential loads.

In an embodiment, where the point of attachment of the bracket 4 is made in the middle of the circumference of the brake plates 2, the attachment point 5 with the cast connection 6 is subjected to minimal bending loads due to convective deformation.

When the hub 3 is mounted on the axle, the brackets 4 assume a shape opposite to the one that is formed after deformation, so the stresses after the load are lower than they would be if the brake disc 1 was not pressed on the axle. In the configuration of the brake disc 1 itself, a close fit with the axle is already taken into account. Namely, when the brake disc 1 is mounted on the axle, the inner diameter of the hub 3 increases by about 0.13 mm in the radial direction. This displacement partly pre-stresses the brackets 4, namely pushes the brackets 4 slightly outwards at the lower end, and subsequently the primary dynamic load is thermal expansion which moves the outer end of the flexible portion 4b outward in the radial direction as described above. The lower end of the bracket 4 relates to the flexible portion 4b of the bracket 4 in the area of connection with the rigid portion 4a.

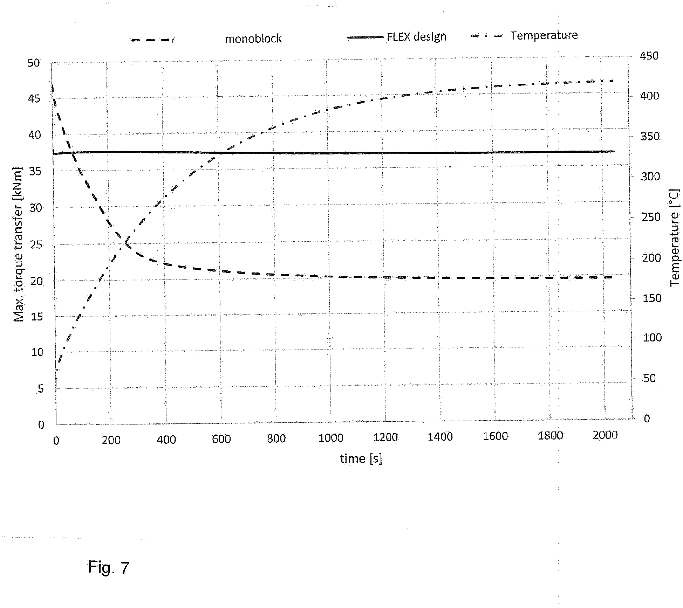

As can be seen from the graph shown in Figure 7, the ability to transmit torque through a tight fit for conventional one-piece brake discs from the prior art (Figure 1) drops drastically with increasing brake disc temperature. The temperatures on the graph show 34 min long braking at which the average surface temperature of the disc rises to 430 °C. The coupling force on the fit drops due to the thermal expansions of the brake disc, as, during heating through the holders in the radial direction, it pulls on the inner portion of the hub, where the tight fit is present. This problem is almost completely avoided if flexible brackets are used. The force drop at the joint for the old variant is -60% while it only amounts to -1.3% for the flexible version. Since the transfer of torque from the brake disc to the axle is crucial, the new structure of the brake disc is thus safer from the point of view of a close-fit slip.

The arrangement and shape of the cooling ribs 7 is made in such a way that the brake disc 1 according to the invention has almost identical thermal and ventilation properties in both directions of rotation and takes into account the asymmetry of the bracket depending on the direction of rotation. This equality of properties in both directions of rotation is an important parameter in the construction of the brake disc 1, since rolling stock travels the same distance forward as well as backward.

The cooling ribs 7 have a preferably oval or round shape in cross-section, with an increased cross-section in the area of contact of each rib 7 with the inner surface of each of the brake plate 2, so a higher heat flow towards the middle of the brake disc 1 is allowed. On the outer circumference 1b of the brake disc 1, i.e. in the outer row, the ribs 7 are stronger, with a larger cross-section, and in oval shapes oriented tangentially to the direction of rotation, because especially during emergency braking due to large temperature gradients the convex deformation of the friction surfaces of the brake pads 2 occurs, which expose those cooling ribs 7 which are located at the inner circumference 1a and at the outer circumference 1b to larger bending. The cooling ribs 7 located on the intermediate radii are less subject to loads due to the convex deformation of the brake plates 2, so they can have smaller cross-sectional dimensions. The inner rows of cooling ribs 7 are adequately offset to allow the same thermal and ventilation properties in both directions of rotation.

Due to the attachment of the flexible brackets 4 on the brake plate 2, it is not possible to place a sufficient number of cooling ribs 7, and thus the brake plates 2 are less connected in this portion, the cooling ribs 7 which are positioned substantially between the adjacent brackets 4 are optionally provided with a larger cross-section and moved in the radial direction as far as possible towards the respective brackets 4 and thus as far as possible towards the inner circumference 1a of the brake disc 1, at least as much as the production constraints allow, i.e. the casting process. Optionally, these ribs 7 have reinforcements in the portion where they rest on the inner surface of each of the brake plates 2, which reduce the deformation of the lower edge of the brake disc 1, because during emergency braking convexity of the brake surface occurs due to large temperature gradients in the brake plates 2.

The specified shape and position of the cooling ribs 7 allows 52% lower ventilation losses. As the ventilation losses increase exponentially with the train speed, these become significant above 100 km/h. The brake disc 1 according to the invention is currently intended for trains up to 200 km/h.

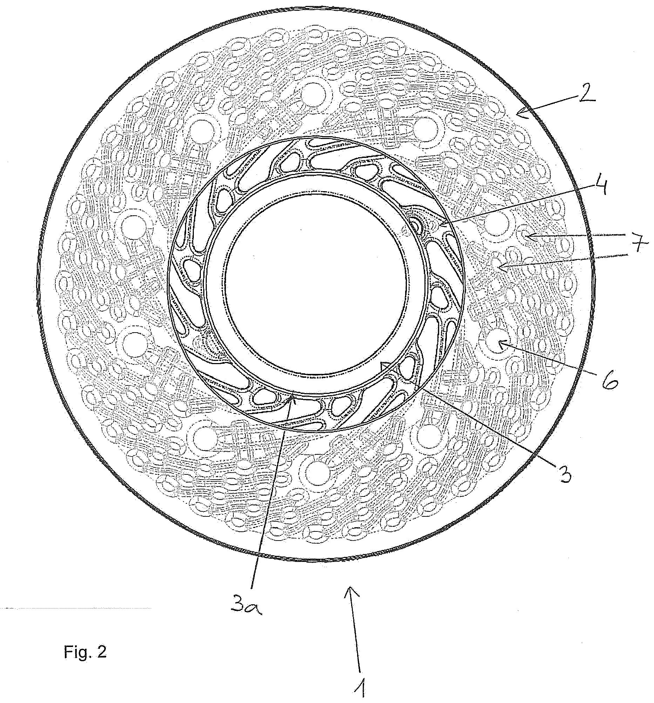

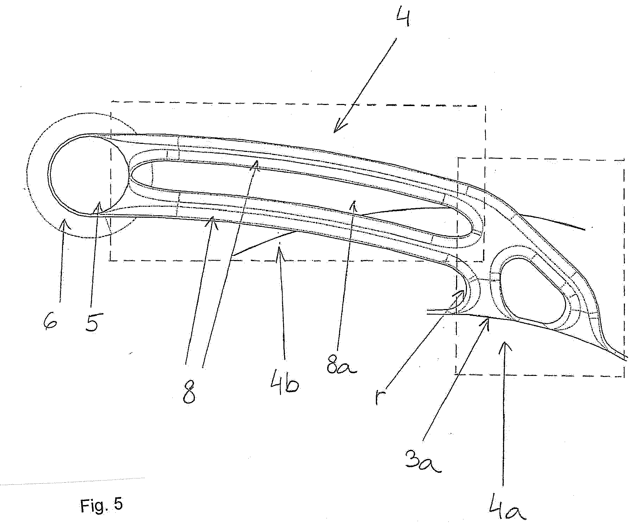

The number of flexible brackets 4 depends on the size of the brake disc 1, but it is desirable for the brake disc 1 to include at least seven flexible brackets 4 in order to achieve the desired characteristics. In the embodiment shown in Figures 2, 3 and 5, the brake disc 1 according to the invention includes ten flexible brackets 4, because due to limitations in the casting process, a larger number is not possible at this size of the disc 1. Thus, a brake disc 1 with a larger circumference could have more brackets 4, while a disc 1 with a smaller circumference could have some less due to space constraints in the tangential direction. The number of brackets 4 is also not limited to even or odd numbers. Due to modal vibrations, odd numbers of brackets 4 are even desirable, as based on simulations in theory, a brake disc 1 with odd number of brackets 4 is expected to have less chance of brake squeal during braking, as the geometry of a brake disc 1 with an odd number of brackets 4 has less geometric symmetries, which means that the geometry has fewer own frequencies.

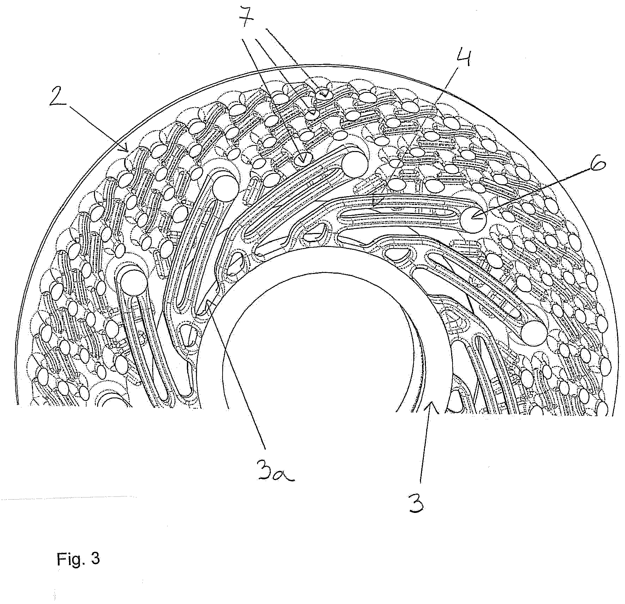

The brake disc 1 according to the invention has special flexible brackets 4 between the brake plates 2 and the hub 3, which enable the brake disc 1 to be cast together with the hub 3 in ductile iron in one piece. The flexible brackets 4 allow free thermal expansion of the brake plates 2 in the radial direction. This release significantly reduces the stresses caused by thermal deformations, which are the main stresses in the brake discs. Since the brake plates 2 are connected to the hub 3 via flexible brackets 4, the tight fit of the hub 3 with the axle is more constant. Namely, through research and FEM simulations, it was observed that a rigid connection between the hub 3 and the brake plates 2 causes problems, as it causes severe radial forces during heating at the place where the tight fit is provided. These stresses significantly reduce the surface pressure on the tight fit itself, thus reducing the ability to transmit torque through the joint by up to 80% (Figure 3). As a result, the prior art versions have very massive brackets 4 which make the brake disc 1 heavier (Figure 1). The new version of the brake disc 1 (Figure 2) reduces the weight of the entire brake disc 1 by up to 25%. Because the stresses during braking on the friction surface are lower, the possibility of cracks on the surface is lower, the service life of the brake pads is longer, and consequently less dust and smoke are generated during braking.

## Claims

1. A one-piece brake disc (1) for rolling stock consisting of two coaxial brake plates (2) which are interconnected by cooling ribs (7), a hub (3) and brackets (4) that are equidistantly arranged circumferentially on an outer circumference (3a) of the hub (3), the brake plates (2) being inseparably fastened to the hub (3) via the brackets (4), wherein each bracket (4) is formed of a rigid portion (4a), with which the bracket (4) is inseparably attached to an outer circumference (3a) of the hub (3), and of a flexible portion (4b) which continues from the rigid portion (4a), the flexible portion (4b) is provided at a point of attachment to the brake plates (2) with an attachment point (5), with which it is inseparably attached to both brake plates (2) via a cast connection (6), wherein the flexible portion (4b) being made at an inclination with respect to a radial axis (R) passing through a centre of the attachment point (5), and wherein an angle (α) of inclination enclosed by said radial axis (R) passing through the centre of the attachment point (5) and a line (S), connecting points at a beginning and an end of the flexible portion (4b) of the bracket (4) and passing through the centre of the attachment point (5), is between 35 and 50°, **characterized in that** the flexible portion (4b) is made of two mutually parallel arms (8) for preventing rotation of the bracket (4) at the point of attachment of the bracket (4) to the brake plate (2) during the deformation that occurs during braking, wherein the arms (8) are flat and in a cross-section rounded at edges, a width of the arm (8) in a radial direction being at least three times larger than a thickness of the arm (8) in a direction perpendicular to said radial direction, and a width of a gap (8a) between the arms (8) being about identical to the width of the individual arm (8).

2. The one-piece brake disc (1) according to claim 1, **characterized in that** the point of attachment of the flexible portion (4b) on the brake plate (2) is formed at one third to one half of a width of the brake plates (2).

3. The one-piece brake disc (1) according to claim 1, **characterized in that** the rigid portion (4a) of the bracket (4) is attached to the hub (3) such that a contact surface of the rigid portion (4a) of the bracket (4) and the hub (3) is substantially perpendicular to the radial axis (R).

4. The one-piece brake disc (1) according to claim 1, **characterized in that** the rigid portion (4a) of the bracket (4) is provided on one side with a radius (r) for allowing the flexible portion (4b) to be moved away from the hub (3) in a radial direction for a certain distance (D), whereby the flexible portion (4b), at a point where the flexible portion (4b) continues from the rigid portion (4a), is raised above the outer circumference (3a) of the hub (3) in a radial direction by the certain distance (D), thus increasing the angle (α) at a same length of the bracket (4), while allowing installation of a larger number of brackets (4).

5. The one-piece brake disc (1) according to claim 1, **characterized in that** the arms (8) are bent in a direction towards the axis of rotation.

6. The one-piece brake disc (1) according to claims 1 to 5, **characterized in that** the cooling ribs (7) have an oval or round cross-section, with an increased cross-section in an area of contact of each rib (7) with an inner surface of each of the brake plates (2), and wherein on an outer circumference (1b) of the brake disc (1), that is in an outer row, there are ribs (7) with a larger cross-section compared to the cooling ribs (7) located in inner rows, and placed tangentially to the direction of rotation, and wherein inner rows of cooling ribs (7) have a smaller cross-section compared to the cooling ribs (7) located in the outer row, and are offset for allowing the same thermal and ventilation properties in both directions of rotation.

7. The one-piece brake disc (1) according to claim 6, **characterized in that** the cooling ribs (7) which are positioned substantially between the adjacent brackets (4) are provided with a larger cross-section compared to the cooling ribs (7) located in inner rows and moved in the radial direction as far as possible towards the respective brackets (4) and thus as far as possible towards an inner circumference (1a) of the brake disc (1).

8. The one-piece brake disc (1) according to claims 1 to 7, **characterized in that** the brake disc (1) includes at least seven flexible brackets (4).

## Patentansprüche

1. Einteilige Bremsscheibe (1) für Schienenfahrzeuge, bestehend aus zwei koaxialen Bremsplatten (2), die durch Kühlrippen (7) miteinander verbunden sind, einer Nabe (3) und Halterungen (4), die äquidistant in Umfangsrichtung an einem Außenumfang (3a) der Nabe (3) angeordnet sind, wobei die Bremsplatten (2) über die Halterungen (4) unlösbar an der Nabe (3) befestigt sind, wobei jede Halterung (4) aus einem starren Abschnitt (4a), mit dem die Halterung (4) unlösbar an einem Außenumfang (3a) der Nabe (3) befestigt ist, und aus einem flexiblen Abschnitt (4b), der sich an den starren Abschnitt (4a) anschließt, gebildet ist, wobei der flexible Abschnitt (4b) an einer Befestigungsstelle an den Bremsplatten (2) mit einem Befestigungspunkt (5) vorgesehen ist, mit dem er über eine Gussverbindung (6) unlösbar an beiden Bremsplatten (2) befestigt ist, wobei der flexible Abschnitt (4b) mit einer Neigung in Bezug auf eine radiale Achse (R) ausgebildet ist, die durch eine Mitte des Befestigungspunkts (5) verläuft, und wobei ein Neigungswinkel (α), umschlossen von der radialen Achse (R), die durch die Mitte des Befestigungspunkts (5) verläuft, und einer durch die Mitte des Befestigungspunkts (5) verlaufenden Linie (S), die die Punkte am Anfang und am Ende des flexiblen Abschnitts (4b) der Halterung (4) verbindet und durch die Mitte des Befestigungspunkts (5) verläuft, zwischen 35 und 50° beträgt, **dadurch gekennzeichnet, dass** der flexible Abschnitt (4b) aus zwei zueinander parallelen Armen (8) besteht, um eine Drehung der Halterung (4) an der Befestigungsstelle der Halterung (4) an der Bremsplatte (2) während der Verformung, die beim Bremsen auftritt zu verhindern, wobei die Arme (8) flach und in einem Querschnitt an den Rändern abgerundet sind, wobei eine Breite des Arms (8) in einer radialen Richtung mindestens dreimal größer ist als eine Dicke des Arms (8) in einer Richtung senkrecht zu der radialen Richtung, und wobei eine Breite eines Spalts (8a) zwischen den Armen (8) etwa gleich der Breite des einzelnen Arms (8) ist.

2. Einteilige Bremsscheibe (1) nach Anspruch 1, **dadurch gekennzeichnet, dass** die Befestigungsstelle des flexiblen Abschnitts (4b) an der Bremsplatte (2) an einem Drittel bis zu einer Hälfte einer Breite der Bremsplatten (2) ausgebildet ist.

3. Einteilige Bremsscheibe (1) nach Anspruch 1, **dadurch gekennzeichnet, dass** der starre Abschnitt (4a) der Halterung (4) an der Nabe (3) derart befestigt ist, dass eine Kontaktfläche des starren Abschnitts (4a) der Halterung (4) und der Nabe (3) im Wesentlichen senkrecht zur Radialachse (R) verläuft.

4. Einteilige Bremsscheibe (1) nach Anspruch 1, **dadurch gekennzeichnet, dass** der starre Abschnitt (4a) der Halterung (4) auf einer Seite mit einem Radius (r) versehen ist, um zu ermöglichen, dass der flexible Abschnitt (4b) von der Nabe (3) in einer radialen Richtung für einen bestimmten Abstand (D) wegbewegt werden kann, wodurch der flexible Abschnitt (4b) an einem Punkt, an dem sich der flexible Abschnitt (4b) an den starren Abschnitt (4a) anschließt, über den Außenumfang (3a) der Nabe (3) in einer radialen Richtung um den bestimmten Abstand (D) angehoben wird, wodurch der Winkel (α) auf eine gleiche Länge der Halterung (4) vergrößert wird, während die Installation einer größeren Anzahl von Halterungen (4) ermöglicht wird.

5. Einteilige Bremsscheibe (1) nach Anspruch 1, **dadurch gekennzeichnet, dass** die Arme (8) in Richtung der Drehachse gebogen sind.

6. Einteilige Bremsscheibe (1) nach den Ansprüchen 1 bis 5, **dadurch gekennzeichnet, dass** die Kühlrippen (7) einen ovalen oder runden Querschnitt aufweisen, mit einem vergrößerten Querschnitt in einem Kontaktbereich jeder Rippe (7) mit einer Innenfläche jeder der Bremsplatten (2), und wobei an einem Außenumfang (1b) der Bremsscheibe (1), d. h. in einer äußeren Reihe, Rippen (7) mit einem größeren Querschnitt im Vergleich zu den in der inneren Reihe befindlichen Kühlrippen (7) vorhanden sind und tangential zur Drehrichtung angeordnet sind, und wobei die inneren Reihen von Kühlrippen (7) einen kleineren Querschnitt im Vergleich zu den in der äußeren Reihe befindlichen Kühlrippen (7) aufweisen und versetzt sind um die gleichen thermischen und Ventilationseigenschaften in beiden Drehrichtungen zu ermöglichen.

7. Einteilige Bremsscheibe (1) nach Anspruch 6, **dadurch gekennzeichnet, dass** die im Wesentlichen zwischen den benachbarten Halterungen (4) positionierten Kühlrippen (7) im Vergleich zu den in den Innenreihen befindlichen Kühlrippen (7) einen größeren Querschnitt aufweisen und so weit wie möglich in Richtung der jeweiligen Halterung (4) und damit so weit wie möglich zu einem Innenumfang (1a) der Bremsscheibe (1) hin verschoben werden.

8. Einteilige Bremsscheibe (1) nach den Ansprüchen 1 bis 7, **dadurch gekennzeichnet, dass** die Bremsscheibe (1) mindestens sieben flexible Halterungen (4) aufweist.

## Revendications

1. Disque de frein monobloc (1) pour véhicules sur rails constitué de deux plaques de frein coaxiales (2) qui sont interconnectées par des nervures de refroidissement (7), d'un moyeu (3) et de supports (4) qui sont agencés de manière équidistante sur la circonférence sur une circonférence externe (3a) du moyeu (3), les plaques de frein (2) étant fixées de manière inséparable au moyeu (3) par l'intermédiaire des supports (4), chaque support (4) étant constitué d'une partie rigide (4a), par laquelle le support (4) est fixé de manière inséparable (4b) à une circonférence externe (3a) du moyeu (3), et d'une partie flexible (4b) qui continue à partir de la partie rigide (4a), la partie flexible (4b) étant disposée au niveau d'un point de fixation aux plaques de frein (2) avec un point de fixation (5), avec lequel elle est fixée de manière inséparable aux deux plaques de frein (2) par l'intermédiaire d'une liaison en fonte (6), la partie flexible (4b) étant réalisée selon une inclinaison par rapport à un axe radial (R) passant par un centre du point de fixation (5), et un angle d'inclinaison (α) entourée par ledit axe radial (R) passant par le centre du point de fixation (5) et une ligne (S), reliant des points au début et à une extrémité de la partie flexible (4b) du support (4) et passant par le centre du point de fixation (5), est comprise entre 35 et 50°, **caractérisé en ce que** la partie flexible (4b) est constituée de deux bras mutuellement parallèles (8) pour empêcher la rotation du support (4) au point de fixation du support (4) à la plaque de frein (2) pendant la déformation qui se produit pendant le freinage, les bras (8) étant plats et dans une section transversale arrondis au niveau des bords, une largeur du bras (8) dans une direction radiale étant au moins trois fois plus grande qu'une épaisseur du bras (8) dans une direction perpendiculaire à ladite direction radiale, et une largeur d'un espace (8a) entre les bras (8) étant environ identique à la largeur du bras individuel (8).

2. Disque de frein monobloc (1) selon la revendication 1, **caractérisé en ce que** le point de fixation de la partie flexible (4b) sur la plaque de frein (2) est situé entre un tiers et la moitié d'une largeur des plaques de frein (2).

3. Disque de frein monobloc (1) selon la revendication 1, **caractérisé en ce que** la partie rigide (4a) du support (4) est fixée au moyeu (3) de telle sorte qu'une surface de contact de la partie rigide (4a) du support (4) et du moyeu (3) est sensiblement perpendiculaire à l'axe radial (R).

4. Disque de frein monobloc (1) selon la revendication 1, **caractérisé en ce que** la partie rigide (4a) du support (4) est pourvue sur un côté d'un rayon (r) pour permettre à la partie flexible (4b) d'être éloignée du moyeu (3) dans une direction radiale selon une certaine distance (D), moyennant quoi la partie flexible (4b), au niveau d'un point où la partie flexible (4b) continue à partir de la partie rigide (4a), est élevée au-dessus de la circonférence externe (3a) du moyeu (3) dans une direction radiale par la certaine distance (D), augmentant ainsi l'angle (α) à une même longueur du support (4), tout en permettant l'installation d'un plus grand nombre de supports (4).

5. Disque de frein monobloc (1) selon la revendication 1, **caractérisé en ce que** les bras (8) sont pliés dans une direction vers l'axe de rotation.

6. Disque de frein monobloc (1) selon les revendications 1 à 5, **caractérisé en ce que** les nervures de refroidissement (7) ont une section transversale ovale ou ronde, avec une section transversale accrue dans une zone de contact de chaque nervure (7) avec une surface interne de chacune des plaques de frein (2), et sur une circonférence externe (1b) du disque de frein (1), qui est dans une rangée externe, il y a des nervures (7) ayant une section transversale plus grande par rapport aux nervures de refroidissement (7) situées dans des rangées internes, et placées tangentiellement à la direction de rotation, et des rangées internes de nervures de refroidissement (7) ayant une section transversale plus petite par rapport aux nervures de refroidissement (7) situées dans la rangée externe, et étant décalées pour permettre les mêmes propriétés thermiques et de ventilation dans les deux directions de rotation.

7. Disque de frein monobloc (1) selon la revendication 6, **caractérisé en ce que** les nervures de refroidissement (7) qui sont positionnées sensiblement entre les supports adjacents (4) sont pourvues d'une section transversale plus grande par rapport aux nervures de refroidissement (7) situées dans des rangées internes et déplacées dans la direction radiale aussi loin que possible vers les supports respectifs (4) et ainsi aussi loin que possible vers une circonférence interne (1a) du disque de frein (1).

8. Disque de frein monobloc (1) selon les revendications 1 à 7, **caractérisé en ce que** le disque de frein (1) comprend au moins sept supports flexibles (4).
